# FASCICULE DE BREVET EUROPEEN

(11) **EP 2 886 444 B1**
(45) Date de publication et mention de la délivrance du brevet: **14.09.2016**
(21) Numéro de dépôt: 13199258.8
(22) Date de dépôt: 20.12.2013
(51) Int. Cl.: B64C 1/10

(54) **Cloison de pressurisation pliable pour aéronef, et aéronef équipé d'une telle cloison de pressurisation**
Faltbare Druckwand für Luftfahrzeug, und mit einer solchen Druckwand ausgestattetes Luftfahrzeug
Folding pressure bulkhead for aircraft, and aircraft provided with such a pressure bulkhead

(43) Date de publication de la demande: 24.06.2015
(73) Titulaire: Airbus SAS, 31707 Blagnac Cedex (FR)
(72) Inventeur: THIERS, Jean-Loup, 31770 Colomiers (FR)
(74) Mandataire: Sarraméa, Claude

(56) Documents cités:
- EP-A1- 2 098 448
- DE-A1- 3 906 170
- DE-B- 1 053 319

## Description

### DOMAINE DE L'INVENTION

La présente invention concerne les éléments constitutifs d'un aéronef, et plus particulièrement d'un avion. En particulier, l'invention concerne la cloison arrière de pressurisation, qui est prévue à l'arrière des avions destinés à transporter des passagers.

L'invention concerne également les aéronefs comprenant une telle cloison.

### ART ANTERIEUR

L'arrière du fuselage d'un aéronef, et plus particulièrement d'un avion, comprend généralement une cloison arrière transversale qui sépare la cabine de la queue de l'avion. La cabine est normalement pressurisée, afin d'assurer la santé et le confort des passagers malgré la faible pression régnant aux hautes altitudes. En revanche, la queue de l'avion n'est pas pressurisé. La cloison arrière, également appelée cloison de pressurisation, doit donc résister, quand l'avion est en altitude, à un différentiel de pression entre sa face avant soumise à une relativement haute pression et sa face arrière soumise à une relativement haute pression.

Cette cloison de pressurisation est généralement constituée par un dôme rigide qui est assemblée par sa périphérie à l'arrière du tronçon arrière de l'avion, avant l'assemblage de la queue de l'avion à ce tronçon arrière. Une fois assemblée, la cloison ne peut plus être retirée sans un démontage de la queue de l'avion. La forme de dôme de cette cloison, dont la face concave est orientée vers la cabine, permet une meilleure reprise des efforts générés par le différentiel de pression, quand l'avion est en altitude.

Pour réduire le poids des cloisons de pressurisation et éviter le risque de corrosion, il a été proposé de les fabriquer en matériaux composites plutôt qu'en métal. La reprise des efforts normalement supportés par les cloisons de pressurisation, principalement constitués d'efforts de tension, peut en effet être assurée par une cloison en matériaux composites beaucoup plus légère qu'une cloison métallique.

Cependant, le risque de délamination du matériaux composite, en cas de choc sur la cloison, impose un surdimensionnement qui réduit le gain de poids.

D'autres types de cloisons de pressurisation ont été conçus pour des aéronefs destinés à transporter à la fois, ou successivement, du fret et des passagers, comme par exemple des avions de transports à usage militaire. Les cloisons de pressurisation doivent dans ce cas être amovibles. Il a notamment été proposé par le document DE 1 053 319 d'utiliser comme cloison de pressurisation un rideau souple amovible qui prend la forme d'un dôme quand il est soumis à un différentiel de pression, mais s'affaisse sous l'effet de la gravité quand il n'est plus soumis à ce différentiel de pression. Une telle solution ne présente pas les garanties de fiabilité permettant sa mise en oeuvre dans un avion destiné au transport commercial de passagers, notamment du fait du déplacement de la cloison de pressurisation, quand le différentiel de pression entre ses faces est nul. En effet, ce déplacement risque de mettre la cloison de pressurisation en contact avec des câbles ou avec des conduites circulant à proximité, ce qui pourrait entrainer un risque de détérioration de la cloison ou des câbles et des conduites. Par ailleurs, une telle solution ne permet pas le passage de conduites ou de canalisations à travers la cloisons de pressurisation, dans de bonnes conditions de sécurité.

### OBJECTIFS DE L'INVENTION

La présente invention a pour objectif de pallier ces inconvénients de l'art antérieur.

En particulier, l'invention a pour objectif de fournir une cloison de pressurisation présentant un poids et un coût réduit, par rapport aux cloisons de pressurisation utilisées dans les avions de l'art antérieur destinés au transport de passager.

Un autre objectif est de fournir une telle cloison de pressurisation qui présente une bonne fiabilité, et notamment dont les performances mécaniques ne soit pas affectées par les conséquences d'un choc.

Un objectif particulier de l'invention est de fournir une telle cloison de pressurisation qui ne risque pas de rentrer en contact avec des éléments sensibles de l'avion, au cours des différentes situations d'utilisation de l'avion, et qui permette le passage de conduites ou de canalisations à travers la cloisons de pressurisation, entre la cabine pressurisée et la zone non pressurisée, dans de bonnes conditions de sécurité.

Encore un autre objectif de l'invention est de fournir une telle cloison de pressurisation qui puisse, selon au moins l'un des modes de réalisation, être assemblée plus facilement à l'avion que les cloisons de pressurisation utilisées dans les avions de l'art antérieur destinés au transport de passager. En particulier, un des objectifs de l'invention est de permettre l'assemblage de la cloison de pressurisation à un stade avancé de l'assemblage de l'avion, et de permettre un remplacement plus facile de la cloison de pressurisation en cas de détérioration.

Selon au moins l'un de ses modes de réalisation, l'invention a également pour objectif de fournir une telle cloison de pressurisation qui puisse être transportée et stockée plus facilement que les cloisons de pressurisation de l'art antérieur.

### EXPOSE DE L'INVENTION

Ces objectifs, ainsi que d'autres qui apparaitront plus clairement par la suite, sont atteints selon l'invention par une cloison de pressurisation pour un aéronef, présentant une première face destinée à être soumise à une relativement haute pression et une seconde face destinée à être soumise à une relativement basse pression, la cloison de pressurisation présentant des zones de liaison à la structure rigide de l'aéronef, ladite cloison étant formée d'un matériau souple, permettant son pliage quand elle n'est pas assemblée à la structure rigide de l'aéronef, dans laquelle, selon l'invention, ledit matériau souple est un matériau à mémoire de forme, assurant, quand lesdites zones de liaison sont assemblées à la structure rigide de l'aéronef, le maintien de ladite cloison dans une position d'utilisation unique, sensiblement identique quand les pressions s'exerçant sur ladite première et seconde face s'équilibrent et quand la pression appliquée sur la première face est supérieure à la pression s'exerçant sur la seconde face d'une valeur inférieure à 1, 3 bars.

Ainsi, il est possible de bénéficier avant l'installation de la cloison des avantages liés à sa souplesse, et notamment de la baisse de son encombrement. En revanche, après son installation, cette souplesse n'entraine pas de déplacement géants de la cloison, et la rend moins sensible aux chocs.

Préférentiellement, ledit matériau souple est un matériau composite comprenant une matrice souple et des fibres aptes à supporter un rayon de courbure inférieur à 2 millimètres.

De façon avantageuse, ladite matrice souple est constituée d'un matériaux choisi parmi :
- le silicone,
- le polyuréthane.

De façon avantageuse, lesdites fibres sont choisies parmi :
- les fibres d'aramide,
- les fibres de polyéthylène,
- les fibres de polyester.

Préférentiellement, lesdites zones de liaison comprennent une zone périphérique de ladite cloison de pressurisation.

Selon un mode de réalisation avantageux, lesdites zones de liaison comprennent également une zone d'ancrage, à proximité du centre de ladite cloison.

L'invention concerne également un aéronef comprenant une structure rigide, et comprenant une cloison de pressurisation telle que décrite ci-dessus, assemblée à ladite structure rigide.

Selon un mode de réalisation avantageux, ladite cloison de pressurisation est associée avec un générateur de vibrations pour former un haut-parleur.

### LISTE DES FIGURES

L'invention sera mieux comprise à la lecture de la description suivante de modes de réalisation préférentiels, donnée à titre illustratif et non limitatif, et accompagnée de figures parmi lesquelles :
- la figure 1 est une section partielle du fuselage d'un avion, selon un plan vertical passant par l'axe longitudinal de l'avion, montrant une cloison de pressurisation selon un premier mode de réalisation de l'invention ;
- la figure 2 est une vue de détail de la section de la figure 1, montrant la fixation de la cloison de pressurisation de la figure 1 au fuselage de l'avion ;
- les figures 3, 4 et 5 sont des sections partielles du fuselage d'un avion, selon un plan vertical passant par l'axe longitudinal de l'avion, montrant une cloison de pressurisation respectivement selon un second, un troisième et un quatrième mode de réalisation de l'invention ;
- les figures 6 et 7 sont respectivement des vues de détail de sections du fuselage d'un avion, montrant la fixation de la cloison de pressurisation au fuselage d'un avion selon, respectivement une première et une seconde variante de l'invention ;
- la figure 8 représente en vue de face une cloison de pressurisation selon un mode de réalisation possible de l'invention, adaptée pour être assemblé au fuselage d'un avion conformément à la variante représentée par la figure 7.

### EXPOSE DE MODES DE REALISATION PREFERENTIELS

### Premier mode de réalisation

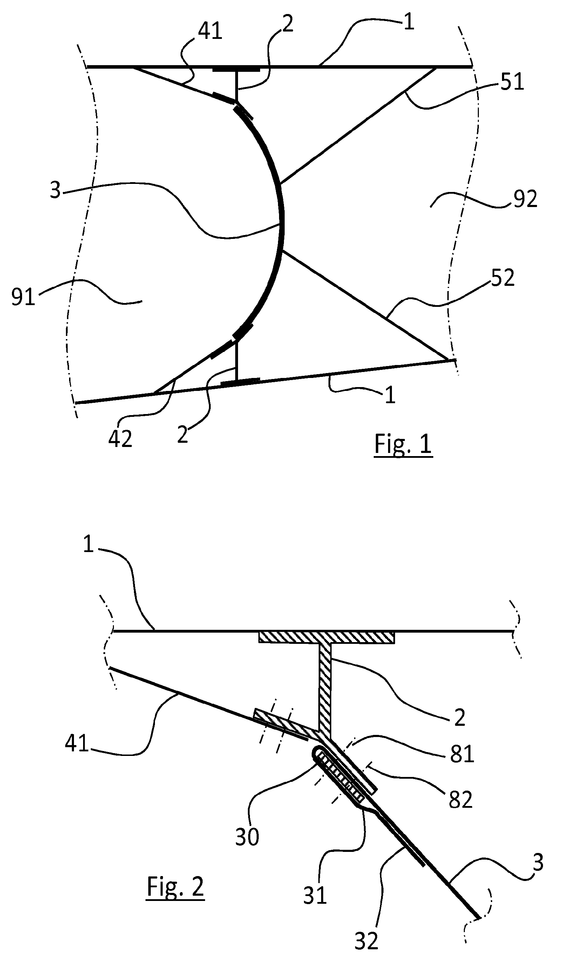

La figure 1 représente une section partielle du fuselage d'un avion, selon un plan vertical passant par l'axe longitudinal de l'avion. Sur cette figure, on peut voir les sections supérieure et inférieure des tôles formant la peau 1 du fuselage, et les sections supérieures et inférieure d'un cadre 2, fixé à la face intérieure de la peau 1 et s'étendant sur tout le périmètre de cette peau, dans un plan sensiblement transversal à l'axe longitudinal de l'avion.

La section du fuselage représentée est une section de l'arrière du fuselage, qui montre la cloison de pressurisation 3 séparant la cabine 91 pressurisée de l'espace 92 non pressurisé. Dans le mode de réalisation représenté par la figure 1, cette cloison de pressurisation 3 présente une forme de dôme dont la face concave est tournée vers la cabine pressurisée. Cette cloison 3 est fixée, au niveau d'une zone de liaison périphérique, sur le cadre 2. La forme en dôme de la cloison de pressurisation, ainsi que sa fixation au cadre 2, est courante pour les cloisons de pressurisation de l'art antérieur. La cloison de pressurisation 3 peut en conséquence être assemblée dans un avion en remplacement d'une cloison de pressurisation correspondante de l'art antérieur, sans que cela engendre de modification substantielle de l'architecture de cet avion.

La figure 1 montre également des câbles 41 et 42, qui connectent le cadre 2 à d'autres éléments (non représentés) de la structure de l'avion. Ces câbles permettent de soulager le cadre 2 des efforts qui sont exercés par la cloison 3 dans la direction, longitudinale de l'avion.

### Caractéristiques de la cloison selon l'invention

Selon l'invention, la cloison de pressurisation 3 est formée d'un matériau souple, permettant son pliage ou son enroulement quand elle n'est pas assemblée à la structure rigide de l'avion, mais présentant également une mémoire de forme, assurant le maintien de la cloison dans une position d'utilisation unique quand elle est assemblée à la structure rigide de l'avion. La cloison de pressurisation reste ainsi dans cette unique position d'utilisation quand les pressions s'exerçant sur ladite ses deux faces s'équilibrent et quand la pression appliquée sur la face destinée à être tournée vers la cabine pressurisée est supérieure à la pression s'exerçant sur la face destinée à être tournée vers la zone non pressurisée, d'une valeur ne dépassant pas 1,3 bars. La cloison de pressurisation reste ainsi dans sa position d'utilisation dans les conditions d'utilisation normale de l'avion.

Cette position d'utilisation unique correspond à une forme unique de la cloison, qui ne change pas de façon sensible au cours des différentes variations de pression subies par les deux faces de la cloison, quand l'avion est au sol et quand l'avion est en altitude. Cette position d'utilisation unique n'exclue cependant pas de légères variations dimensionnelles de la cloison, ne dépassant pas 5%, sous l'effet des différences de pressions entre les deux faces.

Du fait de cette position d'utilisation unique de la cloison, il devient possible de faire passer des canalisations ou des conduites à travers la cloison de pressurisation, sans risque de créer des fuites. En effet, la cloison ne risque pas de se déplacer par rapport au point de passage des conduites ou des canalisations, ce qui permet d'étanchéifier efficacement ce point de passage.

### Fabrication de la cloison en composite

Pour présenter ces caractéristiques de souplesse et de mémoire de forme, la cloison de pressurisation selon l'invention est de préférence formée d'un matériau composite comprenant une matrice souple, telle que, par exemple, du silicone ou du polyuréthane, et des fibres pouvant supporter un rayon de courbure faible, de préférence inférieur à 2 millimètres, comme par exemple des fibres d'aramide, des fibres de polyéthylène (par exemples celles commercialisées sous la dénomination « Dyneema » - marque déposée - ou sous la dénomination « Spectra » - marque déposée), ou encore des fibres de polyester (par exemples celles commercialisées sous la dénomination « Vectran » - marque déposée).

L'extension d'un tel matériau, entre une configuration dans laquelle il n'est pas sollicité en traction (cas de la cloison quand la cabine n'est pas pressurisée) et une configuration dans laquelle il subit une sollicitation maximum en traction (quand le différentiel de pression entre les deux faces de la cloison est maximum) est maintenu en deçà de 5%. Une telle extension n'entraine pas de modification sensible de la forme de la cloison.

La répartition des fibres est avantageusement choisi pour s'opposer aux forces de traction s'exerçant sur la cloison de pressurisation. Elles sont ainsi, de préférence, disposées selon une direction radiale quand la cloison est en forme de dôme.

Il est à noter que la souplesse de la cloison de pressurisation la rend très peu sensible aux chocs. Le risque de délamination du composite est alors très réduit, ce qui rend superflu un surdimensionnement de la cloison de pressurisation. Il est ainsi possible de dimensionner la cloison de façon plus économique et plus légère.

De préférence, la cloison est fabriquée par moulage sur une moule dont la forme correspond à la forme que doit prendre la cloison de pressurisation dans sa position d'utilisation. La cloison de pressurisation garde ainsi en mémoire sa forme de fabrication et tend à revenir vers cette forme quand elle sera est déformée, notamment par pliage.

Il est à noter que, quand plusieurs cloisons de pressurisation sont fabriquées, il est possible de les fabriquer en les empilant, chaque cloison servant de moule pour les cloisons voisines.

### Transport et stockage

Une cloison de pressurisation selon l'invention, présentant des caractéristiques mécaniques permettant son pliage, peut facilement être pliée ou enroulée pour faciliter son transport et son stockage. Ainsi, une telle cloison de pressurisation, même pour un avion de grande taille, peut être pliée de façon à occuper un volume très réduit pour son transport. La cloison de pressurisation peut ainsi être facilement transportée par des moyens de transport conventionnels, tels que des transports routiers.

### Montage dans l'avion

Par ailleurs, la cloison de pressurisation peut être encore pliée pour faciliter son acheminement jusqu'à sa position d'installation dans l'avion, lors de l'assemblage de celui-ci. Une telle cloison de pressurisation pliable rend du coup possible l'assemblage de la cloison de pressurisation arrière à l'avion après l'assemblage de la queue au tronçon arrière du fuselage, alors que les cloisons arrières de pressurisation rigides de l'art antérieur devaient nécessairement être assemblées au tronçon arrière du fuselage avant l'assemblage de la queue. Il est en effet possible d'introduire la cloison de pressurisation pliée dans le fuselage, par les portes de celui-ci ou par les accès de maintenance, et de la déplier ou la dérouler directement à la position où elle doit être fixée.

Cette possibilité de montage plus tardif de la cloison de pressurisation présente plusieurs avantages. D'une part, en effet, elle permet de retarder au maximum l'achat de la cloison arrière de pressurisation, lors de l'assemblage de l'avion, ce qui permet une optimisation du stock. D'autre part, elle rend possible un remplacement facile d'une cloison qui serait détériorée, sans obligation de démontage de la queue de l'avion.

### Câbles de maintien pour pression négative

Lorsque zone de liaison périphérique de la cloison 3 est assemblée sur le cadre 2, la cloison de pressurisation 3 garde sa forme en dôme, même quand la pression est identique dans la cabine 91 et dans la zone non pressurisée 91. Quand l'avion prend de l'altitude, la pression de la zone non pressurisée 92 baisse, ce qui entraine un différentiel de pression entre les deux faces de la cloison de pressurisation 3 pouvant atteindre 1300 millibars. Ce différentiel de pression entraine une tension de la cloison de pressurisation 3, causant une rigidification de celle-ci et un faible allongement de sa surface.

Dans certains cas rares, comme quand l'avion effectue une descente rapide, la pression de la zone non pressurisée 92 peut être momentanément plus élevée que la pression de la cabine pressurisée 92 de l'avion. Le différentiel de pression entre les deux surfaces, dit différentiel de pression négatif, reste normalement inférieur à 50 millibars. La souplesse de la cloison de pressurisation 3, associée à sa forme en dôme, ne la rend pas bien adaptée à la reprise d'efforts engendrés par un tel différentiel de pression négatif. En conséquence, pour éviter que ce différentiel de pression négatif n'entraine une déformation de la cloison de pressurisation 3, il est prévu dans le mode de réalisation représenté à la figure 1 d'amarrer la cloison de pressurisation 3 à la structure de l'avion, par des câbles 51 et 52 s'étendant dans la queue de l'avion et liées à des points d'ancrage sur la surface convexe de la cloison de pressurisation 3, à proximité du centre cde cette cloison de pressurisation. Une fois assemblée à l'avion, par ses zones de liaison constituées par sa zone de liaison périphérique et par ces points d'ancrage des câbles 51 et 52, la cloison de pressurisation 3 peut ainsi conserver sa forme dans toutes les situations de différentiel de pression qu'elle est susceptible de subir.

### Fixation de la cloison de pressurisation

La figure 2 est une vue de détail de la section de la figure 1, montrant la fixation de la cloison de pressurisation de la figure 1 au fuselage de l'avion. Comme le montre cette figure, la peau 1 est assemblée au cadre 2. Ce cadre 2 présente une section de poutre en I, dont deux ailes sont plaquées contre la peau 1. Une autre des ailes, opposée aux ailes plaquées contre la peau 1, est inclinée pour permettre d'y fixer le bord périphérique de la cloison de pressurisation 3.

Un rabat 31, formant une portion périphérique de la cloison de pressurisation 3, est replié et collé sur cette cloison de pressurisation 3 au niveau d'une zone de collage 32. Ce rabat 31 forme ainsi une gaine périphérique dans laquelle peut être introduite une latte périphérique 30. Cette latte périphérique 30 peut être continue, le long de tout le périmètre de la cloison de pressurisation 3. Elle présente dans ce cas une forme de tronc de cône et est mise en place avant le collage du rabat 31. Elle peut également être formée de plusieurs morceaux qui sont introduits dans la gaine périphérique par des ouvertures adaptées au moment du montage de la cloison dans l'avion.

Des trous, symbolisés sur la figure 2 par les axes 81 et 82, sont alors percés dans la latte 30, la cloison de pressurisation 3 et son rabat 31, et dans l'aile 21 du cadre 2. Il permettent d'assembler la périphérie de la cloison de pressurisation 3 au cadre 2 par des fixations connues de l'homme du métier, comme des boulons ou des rivets.

### Autres modes de réalisation de la fixation de la cloison de pressurisation

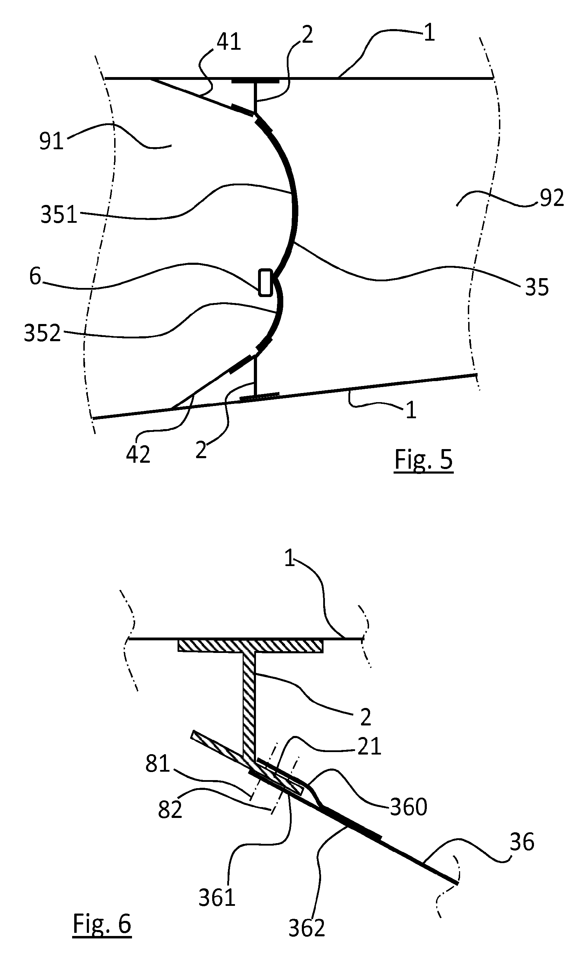

La figure 6 représente un autre mode de réalisation possible de la fixation d'une cloison de pressurisation 36 selon l'invention au cadre 2. Selon ce mode de réalisation, une collerette 360 vient recouvrir la zone périphérique 361 de la cloison de pressurisation 36. Cette collerette 360 est formée par une couronne, préférentiellement du même matériau que la cloison de pressurisation 36, qui est collée à cette cloison de pressurisation au niveau de la zone de collage 362. La cloison de pressurisation 36 est montée de telle sorte que la zone périphérique 361 de la cloison et la collerette 360 entourent l'aile 21 du cadre 2. Des trous, symbolisés par les axes 81 et 82, sont alors percés dans la zone périphérique 361 de la cloison, l'aile 21 et la collerette 360, pour assembler la périphérie de la cloison de pressurisation 36 au cadre 2 par des fixations connues de l'homme du métier, comme des boulons ou des rivets.

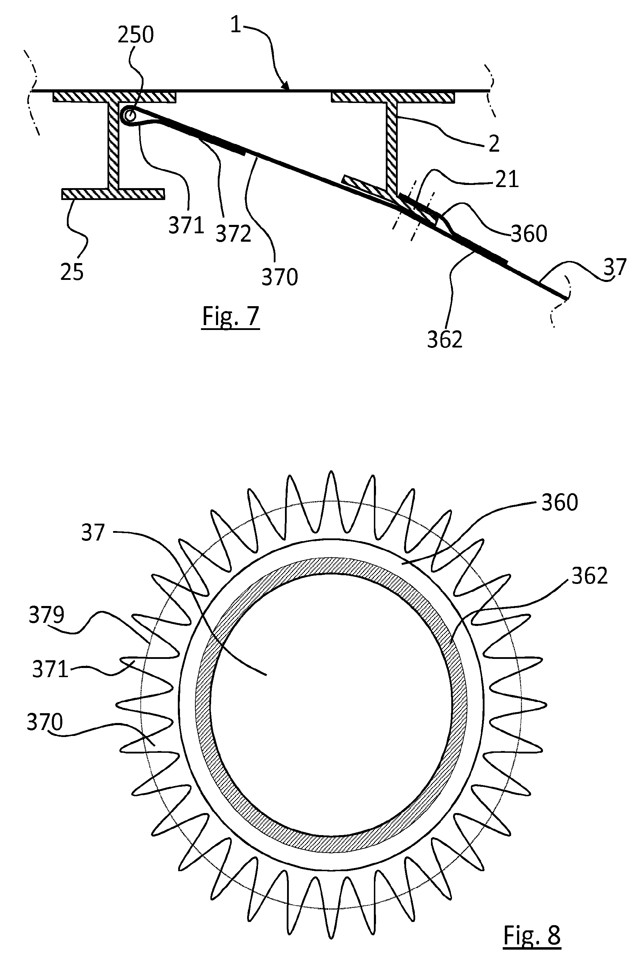

Les figures 7 et 8 représentent respectivement un autre mode de réalisation possible de la fixation d'une cloison de pressurisation 37 selon l'invention au cadre 2, et une vue de face de cette cloison de pressurisation 37. Comme dans le mode de réalisation représenté par la figure 6, une collerette 360, formée par une couronne collée à la cloison de pressurisation 37 au niveau de la zone de collage 362, vient recouvrir une zone périphérique de la cloison de pressurisation 37. La fixation de la cloison de pressurisation 37, sur l'aile 21 du cadre 2, est faite de la même façon que dans le mode de réalisation représenté par la figure 6.

Dans ce mode de réalisation, la zone périphérique de la cloison de pressurisation 37 se prolonge, au-delà de zone de fixation au cadre 2, par des pattes 370 s'étendant radialement. Les extrémités 371 de ces pattes sont pliées, au niveau d'une ligne de pliage 379 représentée en pointillés sur la figure 8, et collées aux pattes au niveau d'une zone de collage 372, afin de former des portions de gaine permettant le passage d'ancrages 250, par exemple associés à un cadre 25. L'effort de fixation de la cloison de pressurisation 37 à la structure de l'avion est ainsi réparti au niveau d'un plus grand nombre de points de fixation.

L'homme du métier pourra, sans difficultés, imaginer des variantes ou des combinaisons des modes de fixation de la cloison de pressurisation qui sont développés ci-dessus, sans sortir du cadre de la présente invention.

### Variantes de forme de cloisons de pressurisation

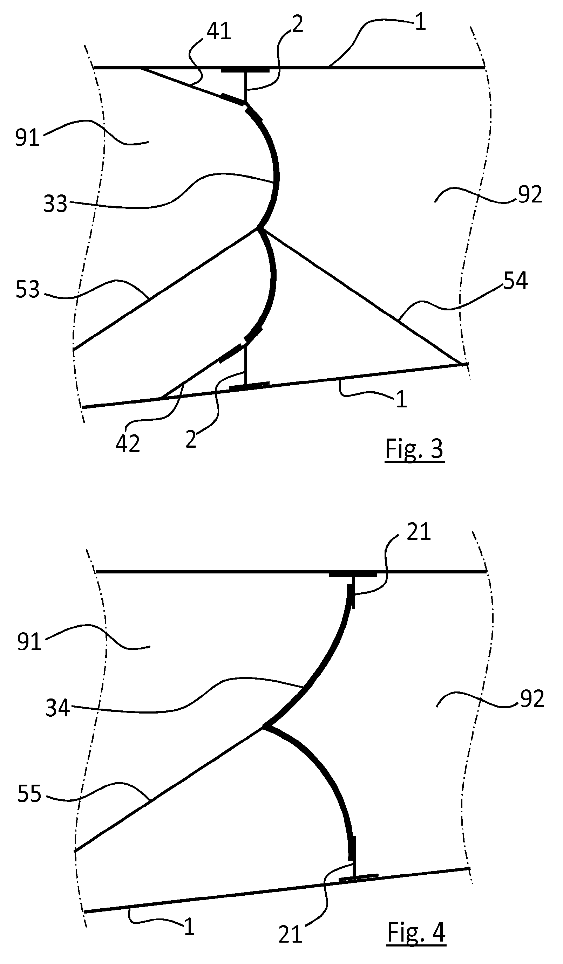

Les figures 3 à 5 représentent trois modes de réalisation possibles de l'invention, dans lesquelles la forme de la cloison de pressurisation se distingue de la forme de dôme du mode de réalisation de la figure 1.

Dans le mode de réalisation représenté par la figure 3, la cloison de pressurisation 33 est maintenue, au niveau d'un point central, par deux câbles 53 et 54, fixés chacun à un point d'ancrage à proximité du centre d'une des faces de la cloison 33, par l'une de leurs extrémités, et à la structure de l'avion par leur autre extrémité. Ces câbles maintiennent la cloison de pressurisation 33 dans une forme correspondant sensiblement à une portion de surface de tore fermé. Il est à noter que cette forme de la cloison 33 correspond, préférentiellement, à la forme dans laquelle la cloison a été moulée, ce qui fait que c'est la forme naturelle de la cloison de pressurisation. Les câbles 53 et 54 permettent uniquement à la cloison de pressurisation de ne pas se déformer quand ses faces sont soumises à un différentiel de pression, positif ou négatif.

Le mode de réalisation représenté par la figure 4 est un cas particulier du mode de réalisation de la figure 5, dans lequel la cloison de pressurisation 34 présente une forme telle que sa portion périphérique de liaison avec le cadre 21 du fuselage est orientée sensiblement dans le plan de ce cadre. Dans ce cas particulier, la cloison de pressurisation 34 ne transmet au cadre 21 que des efforts dans une direction transversale à la direction longitudinale de l'avion. Tous les efforts dans la direction longitudinale de l'avion sont en effet repris par le câble 55, qui est accroché à un point d'ancrage situé à proximité du centre de la cloison de pressurisation, et maintient la cloison 34 dans sa position d'utilisation.

Dans le mode de réalisation représenté par la figure 5, la cloison de pressurisation 35 est fixée à une poutre transversale s'étendant horizontalement dans le fuselage de l'avion. Cette poutre 6 peut par exemple être une des poutres de soutien du plancher de la cabine de l'avion. La cloison de pressurisation est en conséquence divisée en deux portions formant chacune un dôme : une portion supérieure 351 et une portion inférieure 352. Là encore, cette forme de la cloison de pressurisation 35 correspond, de préférence, à la forme dans laquelle la cloison a été moulée, ce qui fait que c'est la forme naturelle de la cloison.

D'autres formes de cloison de pressurisation peuvent être imaginées sans difficultés par l'homme du métier.

La cloison de pressurisation souple peut également remplir d'autres fonctions. Ainsi, il est envisageable qu'une cloison de pressurisation souple constitue la membrane d'un haut-parleur. Un générateur de vibration est alors associés à cette cloison de pressurisation pour constituer un haut-parleur de grande taille, pouvant par exemple diffuser dans la cabine un contre-bruit réduisant la perception du bruit des moteurs de l'avion.

Il est également envisageable, selon une autre variante possible, de ménager dans une cloison de pressurisation une ouverture permettant l'accès à la zone non pressurisée depuis la cabine, par exemple pour la maintenance. Cette accès peut être ménagé par des fermetures à glissière étanches à la pression, prévues sur la cloison de pressurisation.

## Revendications

1. Cloison de pressurisation pour un aéronef, présentant une première face destinée à être soumise à une relativement haute pression et une seconde face destinée à être soumise à une relativement basse pression, la cloison de pressurisation (3, 33, 34, 35, 36, 37) présentant des zones de liaison à la structure rigide de l'aéronef, ladite cloison de pressurisation étant formée d'un matériau souple, permettant son pliage quand elle n'est pas assemblée à la structure rigide de l'aéronef,
**caractérisée en ce que** ledit matériau souple est un matériau à mémoire de forme, assurant, quand lesdites zones de liaison sont assemblées à la structure rigide de l'aéronef, le maintien de ladite cloison de pressurisation (3, 33, 34, 35, 36, 37) dans une position d'utilisation unique, sensiblement identique quand les pressions s'exerçant sur ladite première et seconde face s'équilibrent et quand la pression appliquée sur la première face est supérieure à la pression s'exerçant sur la seconde face d'une valeur inférieure à 1, 3 bars.

2. Cloison de pressurisation selon la revendication 1, **caractérisée en ce que** ledit matériau souple est un matériau composite comprenant une matrice souple et des fibres aptes à supporter un rayon de courbure inférieur à 2 millimètres.

3. Cloison de pressurisation selon la revendication 2, **caractérisée en ce que** ladite matrice souple est constituée d'un matériaux choisi parmi :
- le silicone,
- le polyuréthane.

4. Cloison de pressurisation selon la revendication 2, **caractérisée en ce que** lesdites fibres sont choisies parmi :
- les fibres d'aramide,
- les fibres de polyéthylène,
- les fibres de polyester.

5. Cloison de pressurisation selon l'une quelconque des revendications 1 à 4, **caractérisée en ce que** lesdites zones de liaison comprennent une zone périphérique de ladite cloison de pressurisation.

6. Cloison de pressurisation selon la revendications 5, **caractérisée en ce que** lesdites zones de liaison comprennent également une zone d'ancrage, à proximité du centre de ladite cloison.

7. Aéronef comprenant une structure rigide, **caractérisé en ce qu'**il comprend une cloison de pressurisation (3, 33, 34, 35, 36, 37) selon l'une quelconque des revendications 1 à 6, assemblée à ladite structure rigide.

8. Aéronef selon la revendication 7, **caractérisé en ce que** ladite cloison de pressurisation est associée avec un générateur de vibrations pour former un haut-parleur.

## Patentansprüche

1. Druckwand für ein Luftfahrzeug, die eine erste Seite, die dazu bestimmt ist, einem relativ hohen Druck ausgesetzt zu werden, und eine zweite Seite aufweist, die dazu bestimmt ist, einem relativ niedrigen Druck ausgesetzt zu werden, wobei die Druckwand (3, 33, 34, 35, 36, 37) Bereiche zum Verbinden an die starre Struktur des Luftfahrzeugs aufweist, wobei die Druckwand aus einem flexiblen Material gebildet ist, das ihr Falten ermöglicht, wenn sie nicht an der starren Struktur des Luftfahrzeugs befestigt ist,
**dadurch gekennzeichnet, dass** das flexible Material ein Formgedächtnismaterial ist, das, wenn die Verbindungsbereiche an der starren Struktur des Luftfahrzeugs befestigt sind, das Halten der Druckwand (3, 33, 34, 35, 36, 37) in einer einzigen Gebrauchsposition gewährleistet, die im Wesentlichen identisch ist, wenn sich die Drucke,
die auf die erste und zweite Seite ausgeübt werden, ausgleichen, und wenn der Druck, der auf die erste Seite aufgebracht wird, höher als der Druck ist, der auf die zweite Seite mit einem Wert, der niedriger als 1,3 bar ist, aufgebracht wird.

2. Druckwand nach Anspruch 1, **dadurch gekennzeichnet, dass** das flexible Material ein Verbundwerkstoff ist, der eine flexible Matrix und Fasern aufweist, die geeignet sind, einem Krümmungsradius von weniger als 2 Millimetern standzuhalten.

3. Druckwand nach Anspruch 2, **dadurch gekennzeichnet, dass** die flexible Matrix aus einem Material gebildet ist, das ausgewählt ist aus:
- Silikon
- Polyurethan.

4. Druckwand nach Anspruch 2, **dadurch gekennzeichnet, dass** die Fasern ausgewählt sind aus:
- Aramidfasern,
- Polyethylenfasern,
- Polyesterfasern.

5. Druckwand nach einem der Ansprüche 1 bis 4, **dadurch gekennzeichnet, dass** die Verbindungsbereiche einen Randbereich der Druckwand aufweisen.

6. Druckwand nach Anspruch 5, **dadurch gekennzeichnet, dass** die Verbindungsbereiche ebenfalls einen Verankerungsbereich in der Nähe der Mitte der Wand aufweisen.

7. Luftfahrzeug, umfassend eine starre Struktur, **dadurch gekennzeichnet, dass** es eine Druckwand (3, 33, 34, 35, 36, 37) nach einem der Ansprüche 1 bis 6 aufweist, die an der starren Struktur befestigt ist.

8. Luftfahrzeug nach Anspruch 7, **dadurch gekennzeichnet, dass** die Druckwand mit einem Schwingungserzeuger verbunden ist, um einen Lautsprecher zu bilden.

## Claims

1. Pressure bulkhead for an aircraft, having a first face designed to be subjected to a relatively high pressure and a second face designed to be subjected to a relatively low pressure, the pressure bulkhead (3, 33, 34, 35, 36, 37) having regions for connecting to the rigid structure of the aircraft, said pressure bulkhead being made of a flexible material, allowing it to be folded when it is not attached to the rigid structure of the aircraft, **characterized in that** said flexible material is a shape memory material allowing, when said connection regions are attached to the rigid structure of the aircraft, said pressure bulkhead (3, 33, 34, 35, 36, 37) to be held in a unique service position which is essentially identical when the pressures acting on said first and second face are balanced and when the pressure acting on the first face is greater than the pressure acting on the second face by less than 1.3 bar.

2. Pressure bulkhead according to Claim 1, **characterized in that** said flexible material is a composite material comprising a flexible matrix and fibres that are able to withstand a radius of curvature smaller than 2 millimetres.

3. Pressure bulkhead according to Claim 2, **characterized in that** said flexible matrix is made of a material chosen from:
- silicone,
- polyurethane.

4. Pressure bulkhead according to Claim 2, **characterized in that** said fibres are chosen from:
- aramid fibres,
- polyethylene fibres,
- polyester fibres.

5. Pressure bulkhead according to any one of Claims 1 to 4, **characterized in that** said connection regions include a peripheral region of said pressure bulkhead.

6. Pressure bulkhead according to Claim 5, **characterized in that** said connection regions also include an anchoring region close to the centre of said bulkhead.

7. Aircraft comprising a rigid structure, **characterized in that** it comprises a pressure bulkhead (3, 33, 34, 35, 36, 37), according to any one of Claims 1 to 6, attached to said rigid structure.

8. Aircraft according to Claim 7, **characterized in that** said pressure bulkhead is connected to a vibration generator so as to form a loudspeaker.
